# EUROPEAN PATENT SPECIFICATION

(11) **EP 2 987 652 B1**
(45) Date of publication and mention of the grant of the patent: **07.12.2016**
(21) Application number: 15179597.8
(22) Date of filing: 04.08.2015
(51) Int. Cl.: B60C 11/03, B60C 11/11

(54) **PNEUMATIC TIRE**
LUFTREIFEN
PNEUMATIQUE

(30) Priority: 19.08.2014 JP 2014166855
(43) Date of publication of application: 24.02.2016
(73) Proprietor: SUMITOMO RUBBER INDUSTRIES, LTD., Hyogo-ken (JP)
(72) Inventor: FUJITA, Masayuki, Kobe-shi, Hyogo 651-0072 (JP)
(74) Representative: Manitz, Finsterwald & Partner GbR

(56) References cited:
- EP-A1- 1 637 355
- EP-A1- 2 428 371
- JP-A- 2006 082 734

## Description

### Technical Field

The present invention relates to a pneumatic tire capable of displaying excellent wet grip performance.

### Background Art

The following patent document 1 proposes a racing kart tire having a substantially v-shaped main oblique groove, and a shoulder sub groove and a center sub groove connected to the main oblique groove.

In such tire, during wet running, water between the tread portion and road surface is guided toward tread edges by the main oblique groove, and the wet grip performance is improved.

In the tire of the patent document 1, however, with respect to a block group of a center block and a shoulder block which are adjacent to each other, an outer end of the center sub groove is disposed on the heel-side in a tire rotational direction, of an inner end of the shoulder sub groove. Consequently, there have been a problem such that part of water in the main oblique groove is guided toward the tire equator through a center transverse groove, and it is difficult to obtain sufficient wet grip performance in the vicinity of the tire equator.

Another tire tread comprising V-shaped center main grooves and corresponding shoulder main grooves is known from patent document 2.

### [Prior art document]

### [Patent document]

[Patent document 1] Japanese Patent Application Publication No.2006-082735
[Patent document 2] European Patent Application Publication No. 2 428 371 A1

### Summary of the Invention

### Technical Problem

The present invention was studied out with the view to the above-mentioned problem, and a primary object is to provide a pneumatic tire in which, based on improving a groove arrangement, the wet grip performance is improved.

### Solution to Problem

The present invention is a pneumatic tire having a tread portion for which a tire rotational direction is specified, and provided in the tread portion with
a plurality of substantially v-shaped main oblique grooves comprising a center main groove portion extending in the tire axial direction across the tire equator, and a pair of shoulder main groove portions connected to both ends of the center main groove portion and extending toward the toe-side in the tire rotational direction at least to tread edges,
a pair of connecting grooves disposed on both sides of the tire equator, and connecting between the main oblique grooves adjacent to each other in the tire circumferential direction,
a substantially trapezoidal center block sectionalized by the main oblique grooves adjacent to each other in the tire circumferential direction and a pair of the connecting grooves, and
shoulder blocks sectionalized on both sides of the center block by the main oblique grooves and the connecting grooves, characterized in that
the center block is provided with a center sub groove whose both outer ends in the tire axial direction are respectively connected to a pair of the shoulder main groove portions,
the shoulder block is provided with a shoulder sub groove extending from the inner end connected to the shoulder main groove portion to the tread edge,
in a block group of one center block and two shoulder blocks adjacent to both sides of the center block in the tire axial direction,
the inner end of the shoulder sub groove opposes to the outer end of the center sub groove, or is positioned on the heel-side in the tire rotational direction, of the outer end of the center sub groove.

In the block group of the pneumatic tire of the present invention, it is preferable that the inner end of the shoulder sub groove is positioned on the heel-side in the tire rotational direction, of the outer end of the center sub groove, and positioned on the toe-side of the heel-side edge in the tire rotational direction, of the center block.

In the pneumatic tire of the present invention, it is preferable that the center sub groove extends in the form of an arc convexed toward the tire rotational direction.

In the pneumatic tire of the present invention, it is preferable that the center sub groove extends in the form of a substantially v shape convexed toward the tire rotational direction.

In the pneumatic tire of the present invention, it is preferable that the center block includes a heel-side piece disposed on the heel-side of the center sub groove, and a toe-side piece disposed on the toe-side of the center sub groove, and
a toe-side edge of the toe-side piece extending in the tire axial direction is curved with a radius of curvature smaller than that of a heel-side edge of the heel-side piece extending in the tire axial direction.

### Advantageous Effects of Invention

The pneumatic tire according to the present invention is provided in the tread portion with
a plurality of the substantially v-shaped main oblique grooves comprising the center main groove portion extending in the tire axial direction across the tire equator, and a pair of the shoulder main groove portions connected to both ends of the center main groove portion and extending toward the toe-side in the tire rotational direction at least to tread edges,
a pair of the connecting grooves disposed on both sides of the tire equator, and connecting between the main oblique grooves adjacent to each other in the tire circumferential direction,
the substantially trapezoidal center block sectionalized by the main oblique grooves adjacent to each other in the tire circumferential direction and a pair of the connecting grooves, and
the shoulder blocks sectionalized on both sides of the center block by the main oblique grooves and the connecting grooves.

During wet running, such main oblique grooves and connecting grooves effectively guide water toward the tread edges by utilizing the tire rotation, and the wet grip performance is improved.

The center block is provided with the center sub groove whose both outer ends in the tire axial direction are respectively connected to a pair of the shoulder main groove portions.

The shoulder block is provided with the shoulder sub groove extending from the inner end connected to the shoulder main groove portion to the tread edge.

Further, in the block group of one center block and two shoulder blocks adjacent to both sides of the center block in the tire axial direction, the inner end of the shoulder sub groove opposes to the outer end of the center sub groove, or is positioned on the heel-side in the tire rotational direction, of the outer end of the center sub groove.

By configuring as above, when the water in the center main groove portion is guided toward the tread edge, part of the water flows into the shoulder sub groove and is discharged from the tread edge. with this action, the water in the main oblique groove is decreased, therefore, the water in the main oblique groove does not flow back toward the center sub groove.

The water in the center sub groove is guided toward the main oblique groove where the water is decreased. Accordingly, water in the vicinity of the tire equator is effectively discharged toward the tread edges and the wet grip performance is improved.

### Brief Description of Drawings

Fig. 1 is a developed view of the tread portion of a pneumatic tire as an embodiment of the present invention.
Fig. 2 is an enlarged view the center block in Fig. 1.
Fig. 3 is an enlarged view the shoulder block in Fig. 1.
Fig. 4 is a developed view of a tread portion showing another embodiment of the present invention.
Fig. 5 is a developed view of a tread portion showing another embodiment of the present invention.
Fig. 6 is a developed view of a tread portion showing another embodiment of the present invention.
Fig. 7 is a developed view of a tread portion showing another embodiment of the present invention.
Fig. 8 is a developed view of a tread portion showing another embodiment of the present invention.
Fig. 9 is a developed view of the tread portion of a comparative example.

### Description of Embodiments

Embodiments of the present invention will now be described in detail in conjunction with the accompanying drawings.

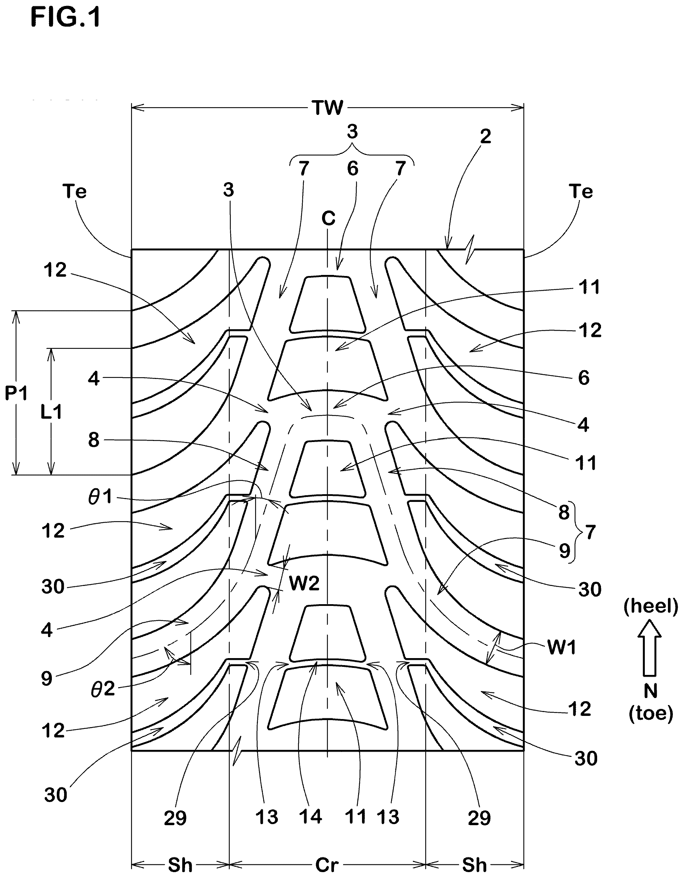

As shown in Fig. 1, a pneumatic tire in this embodiment (hereinafter, may be referred as "the tire" simply) is suitably used as, for example, a tire for a four-wheeled racing kart. In the tire in this embodiment, its tire rotational direction N is specified. The tire rotational direction N is indicated in, for example, a sidewall portion (not shown) by the use of characters or a symbol.

The tire 1 is provided in the tread portion 2 with main oblique grooves 3 arranged at intervals in the tire circumferential direction, and connecting grooves 4 connecting between the main oblique grooves 3.

The main oblique groove 3 extends toward the toe-side in the tire rotational direction N at least to both tread edges Te in the form of a substantially v shape (in Fig. 1, a substantially v shape turned upside down).

During wet running, by utilizing the tire rotation, such main oblique groove 3 smoothly discharges water in the groove toward the tread edges Te.

The tread edges Te are defined as outermost ground contacting positions in the tire axial direction under a standard loaded state in which the tire under a standard state mounted on a standard wheel rim, inflated to a standard inner pressure and loaded with no load, is ground contacted with a flat surface at a camber angle of zero by applying the standard load.
under the standard state, the distance in the tire axial direction between the tread edges Te is defined as the tread width TW.

Dimensions and the like of various parts of the tire refer to values under the standard state unless otherwise noted.

The "standard wheel rim" is a wheel rim specified for the tire by a standard included in a standardization system on which the tire is based, for example, the "normal wheel rim" in JATMA, "Design Rim" in TRA, and "Measuring Rim" in ETRTO.

The "standard inner pressure" is air pressure specified for the tire by a standard included in a standardization system on which the tire is based, for example, the "maximum air pressure" in JATMA, maximum value listed in the "TIRE LOAD LIMITS AT VARIOUS COLD INFLATION PRESSURES" table in TRA, and "INFLATION PRESSURE" in ETRTO.

If the tire is for a passenger car, the standard inner pressure is 180 kPa.

If the tire is for a racing kart, the standard inner pressure is 100 kPa.

The "standard load" is a load specified for the tire by a standard included in a standardization system on which the tire is based, for example, the "maximum load capacity" in JATMA, maximum value listed in "TIRE LOAD LIMITS AT VARIOUS COLD INFLATION PRESSURES" table in TRA, and "LOAD CAPACITY" in ETRTO. If the tire is for a passenger car, the standard load is 88 % of the above-mentioned load.

If the tire is for a racing kart, the standard load is 392 N.

The main oblique groove 3 includes a center main groove portion 6 disposed on the tire equator C side, and a pair of shoulder main groove portions 7 connected to both ends of the center main groove portion 6.

The center main groove portion 6 extends in the tire axial direction across the tire equator C.

For example, the center main groove portion 6 is gently curved convexly toward the heel-side in the tire rotational direction N (hereinafter, may be referred as merely "the heel-side"). without limited to this configuration, the center main groove portion 6 may be formed, for example, into a straight configuration,

The shoulder main groove portion 7 extends toward the toe-side in the tire rotational direction N (hereinafter, may be referred as merely "the toe-side") at least to the tread edge Te.

For example, the shoulder main groove portion 7 includes a first shoulder main groove portion 8 inclined at a constant angle θ1 with respect to the tire circumferential direction, and a second shoulder main groove portion 9 extending toward the toe-side while gradually smoothly increasing its angle θ2 with respect to the tire circumferential direction.

The angle θ1 of the first shoulder main groove portion 8 with respect to the tire circumferential direction is, for example, 10 to 30 degrees.

The angle θ2 of the second shoulder main groove portion 9 with respect to the tire circumferential direction is, for example, more than the angle θ1 of the first shoulder main groove portion 8.

Preferably, the angle θ2 of the second shoulder main groove portion 9 is 10 to 90 degrees, more preferably 20 to 70 degrees. Such second shoulder main groove portion 9 smoothly guides water in the main oblique groove 3 toward the tread edge Te.

The groove width W1 of the shoulder main groove portion 7 is, for example, 3% to 12%, preferably 5% to 10 % of the tread width TW.

The groove depth d1 (not shown) of the shoulder main groove portion 7 is, for example, 3 to 7 mm.

For example, the connecting groove 4 connects between the center main groove portion 6 and the shoulder main groove portion 7 of the main oblique groove 3 adjacent in the tire circumferential direction to the center main groove portion 6. Such connecting groove 4 guides part of the water in the center main groove portion 6 into the adjacent shoulder main groove portion 7 of the main oblique groove 3, and helps to improve the wet grip performance.

The width W2 of the connecting grooves 4 is not to be limited to a particular range, but preferably 1 to 10 mm, more preferably 2 to 6 mm.

The groove depth d2 (not shown) of the connecting grooves 4 is, for example, 3 to 7 mm.

The tread portion 2 has center blocks 11 and shoulder blocks 12 on both sides thereof which are sectionalized by the above-mentioned main oblique grooves 3 and the connecting grooves 4.

In this embodiment, all of the grooves and all of the blocks are arranged substantially symmetrically about the tire equator C. But, this invention is not limited to such arrangement.

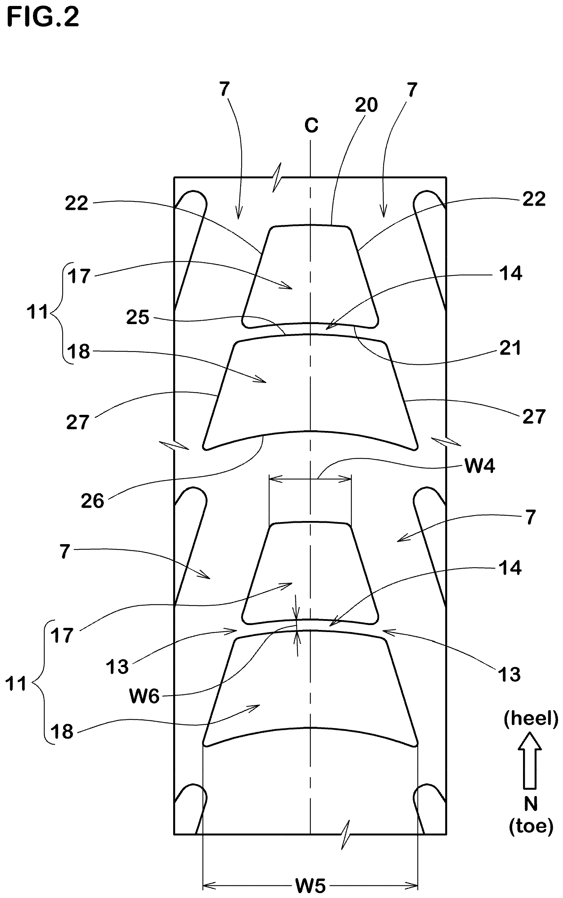

As shown in Fig. 2, the center block 11 is sectionalized into a substantially trapezoidal shape where the width in the tire axial direction gradually increases toward the toe-side. The block having a "substantially trapezoidal shape" means that the block has, on both sides in the tire circumferential direction, a pair of edges extending in the tire axial direction. It is not necessary that the shape is an exact trapezoid.

The ratio W4/W5 of the width W4 in the tire axial direction of the center block 11 at the heel-side end and the width W5 in the tire axial direction of the center block 11 at the toe-side end is preferably not less than 0.3, more preferably not less than 0.35, but preferably not more than 0.45, more preferably not more than 0.4.

During wet running, such center block 11 cuts a water film by its heel-side edge, and serves to prevent the occurrence of aquaplaning.

In order to effectively bring out the above described advantageous effects while preventing uneven wear of the block, it is preferred that the width W4 in the tire axial direction, of the center block 11 at the heel-side end is not less than 0.05 times, more preferably not less than 0.1 times, but not more than 0.2 times, more preferably not more than 0.15 times the tread width TW.

The center block 11 is provided with a center sub groove 14 whose both outer ends 13 in the tire axial direction are respectively connected to a pair of the shoulder main groove portions 7.

For example, the center sub groove 14 has a groove width and a groove depth less than those of the main oblique groove 3.

The center sub groove 14 in this embodiment extends in the form of an arc convexed toward the tire rotational direction, for example.

Such center sub groove 14 can guide the water therein toward both outer sides in the tire axial direction by utilizing the tire rotation.

The groove width W6 of the center sub groove 14 is preferably not less than 1 mm, more preferably not less than 3 mm, but preferably not more than 7 mm, more preferably not more than 5 mm.

Such center sub groove 14 serves to discharge water existing in the vicinity of the tire equator C toward the tread edges Te while preventing uneven wear of the center block 11.

By the above-mentioned center sub groove 14, the center block 11 is sectionalized into a heel-side piece 17 on the heel-side of the center sub groove 14, and a toe-side piece 18 on the toe-side of the center sub groove 14.

Each of the heel-side piece 17 and the toe-side piece 18 has a substantially trapezoidal shape.

For example, the heel-side piece 17 has a heel-side edge 20 extending in the tire axial direction, a toe-side edge 21 extending in the tire axial direction, and a pair of side edges 22 extending between the heel-side edge 20 and the toe-side edge 21.

For example, the heel-side edge 20 of the heel-side piece 17 extends straight or in the form of an arc gently convexed toward the tire rotational direction N.

For example, the toe-side edge 21 of the heel-side piece 17 extends in the form of an arc gently convexed toward the tire rotational direction N.

In this embodiment as a preferable embodiment, the toe-side edge 21 of the heel-side piece 17 has a radius of curvature less than that of the heel-side edge 20 of the heel-side piece 17.

During braking in particular, such toe-side edge 21 of the heel-side piece 17 is caught on the road surface, and
multidirectionally generates frictional force. Consequently, steering stability during braking on wet road is improved.

Each of the paired side edges 22 of the heel-side piece 17 extends straight. However, the side edge 22 may be smoothly curved, for example.

For example, the ground contacting surface of the toe-side piece 18 has an area more than that of the ground contacting surface of the heel-side piece 17.

The toe-side piece 18 has a heel-side edge 25 extending in the tire axial direction, a toe-side edge 26 extending in the tire axial direction, and a pair of side edges 27 extending between the heel-side edge 25 and the toe-side edge 26.

For example, the heel-side edge 25 of the toe-side piece 18 extends in the form of an arc gently convexed toward the tire rotational direction N.

For example, the heel-side edge 25 of the toe-side piece 18 extends along the toe-side edge 21 of the heel-side piece 17.

For example, the toe-side edge 26 of the toe-side piece 18 extends in the form of an arc gently convexed toward the tire rotational direction N.

In this embodiment as a preferable embodiment, the toe-side edge 26 of the toe-side piece 18 is curved with a radius of curvature less than that of the heel-side edge 20 of the heel-side piece 17.

During wet running, such toe-side piece 18 can smoothly guide the water, which is pushed by the center block 11 adjacent thereto on the toe-side thereof, toward the shoulder main groove portions 7.

Each of the paired side edges 27 of the toe-side piece 18 extends straight. Preferably, the side edges 27 of the toe-side piece 18 are respectively in line with the side edges 22 of the heel-side piece 17.

Such toe-side piece 18 does not hinder water flow in the shoulder main groove portion 7, and improves wet grip performance.

As shown in Fig. 1, a pair of shoulder blocks 12 are disposed on both sides of the center block 11, and sectionalized by the main oblique grooves 3 and the connecting grooves 4.

For example, the shoulder block 12 has such a shape that the length L1 in the tire circumferential direction, of the shoulder block 12 gradually decreases toward the inner end in the tire axial direction, of the shoulder block 12.

The shoulder block 12 is provided with a shoulder sub groove 30 extending to the tread edge Te from its inner end 29 connected to the shoulder main groove portion 7.

For example, the shoulder sub groove 30 has a groove width and a groove depth less than those of the main oblique groove 3.

In a block group consisting of one center block 11 and two shoulder blocks 12 disposed adjacently to the center block 11 in the tire axial direction on both sides thereof, the inner end 29 of the shoulder sub groove 30 opposes to the outer end 13 of the center sub groove 14, or is positioned on the heel-side in the tire rotational direction N, of the outer end 13 of the center sub groove 14.

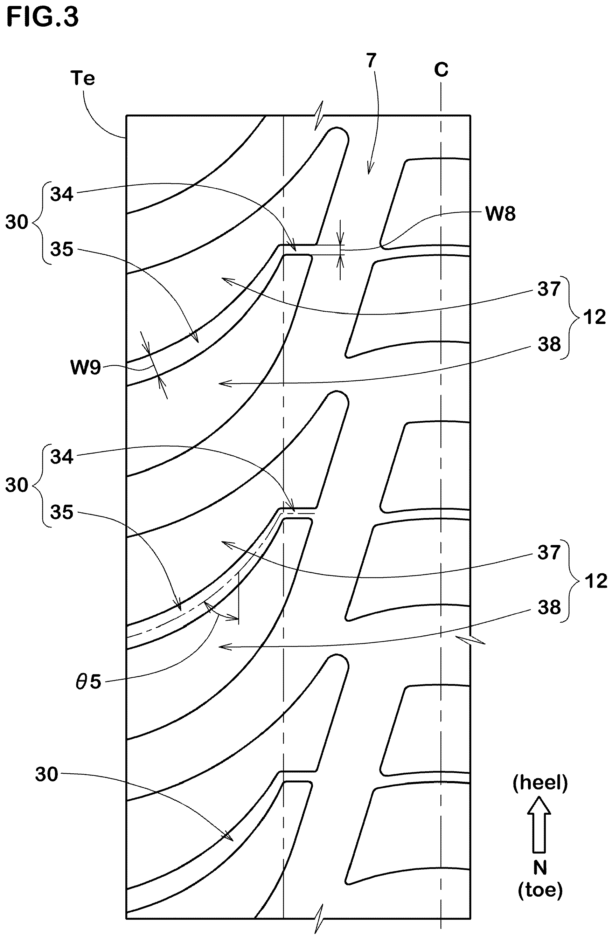

For example, as shown in Fig. 3, the shoulder sub groove 30 includes a first groove part 34 connected to the shoulder main groove portion 7, and a second groove part 35 extending along the shoulder main groove portion 7 from the outer end in the tire axial direction of the first groove part 34.

Such shoulder sub groove 30 guides part of water in the shoulder main groove portion 7 toward the tread edge Te while preventing uneven wear of the shoulder block 12.

For example, the first groove part 34 extends at an angle θ3 (not shown) of not more than 45 degrees with respect to the tire axial direction.

Preferably, the first groove part 34 extends in parallel with the tire axial direction.

The groove width W8 of the first groove part 34 is preferably not less than 1 %, more preferably not less than 2.5 %, but preferably not more than 5 %, more preferably not more than 3.5 % of the tread width TW.

Such first groove part 34 improves wear resistance performance and wet grip performance in a well balanced manner.

The second groove part 35 has a groove width W9 more than that of the first groove part 34.

The groove width W9 of the second groove part 35 is preferably not less than 1.5 times, more preferably not less than 1.8 times, but preferably not more than 2.5 times, more preferably not more than 2.2 times the groove width W8 of the first groove part 34. Preferably, the groove width W9 of the second groove part 35 in this embodiment gradually increases toward the outside in the tire axial direction.

Such second groove part 35 helps to more effectively guide the water in the shoulder sub groove 30 toward the tread edge Te.

For example, in order to effectively bring out the above described advantageous effects, the second groove part 35 is inclined at an angle θ5 of from 20 to 70 degrees with respect to the tire circumferential direction.

Preferably, the angle θ5 of the second groove part 35 with respect to the tire circumferential direction is gradually increased toward the outside in the tire axial direction.

By the above-mentioned shoulder sub groove 30, the shoulder block 12 includes a first shoulder block piece 37 disposed on the heel-side of the shoulder sub groove 30, and a second shoulder block piece 38 disposed on the toe-side of the shoulder sub groove 30.

It is preferable that the area S1 of the ground contacting face of the first shoulder block piece 37 is more than the area S2 of the ground contacting face of the second shoulder block piece 38.

The ratio S1/S2 of the area S1 of the first shoulder block piece 37 to the area S2 of the second shoulder block piece 38 is preferably not less than 1.03, more preferably not less than 1.05, but preferably not more than 1.2, more preferably not more than 1.1.

Thereby, the shoulder block 12 can wear evenly, and the wear resistance performance is improved.

By providing the above-mentioned structure as shown in Fig. 1, when water in the center main groove portion 6 is guided toward the tread edge Te, part of the water flows into the shoulder sub groove 30 and is discharged from the tread edge Te. with this action, the water in the main oblique groove 3 is decreased, therefore, the water in the main oblique groove 3 does not flow back toward the center sub groove 14.

Further, the water in the center sub groove 14 is guided toward the main oblique groove where the water is decreased. Accordingly, water in the vicinity of the tire equator C is effectively discharged toward the tread edges Te and the wet grip performance is improved.

In order to improve the wear resistance performance and the wet grip performance in a well balanced manner, pitches P1 of the center blocks 11 and the shoulder blocks 12 as shown in Fig. 1 are preferably 0.5 % to 2.0 % of the circumference of the tire at the tire equator C, for example.

It is preferable that the land ratio of a center region Cr of the tread portion 2, which is centered on the tire equator C and ranges 50 % of the tread width TW, is in a range of from 30 % to 60 %.

If the land ratio of the center region Cr is less than 30 %, there is a possibility that the wear resistance performance and traction are deteriorated.

If the land ratio of the center region Cr is more than 60 %, there is a possibility that the wet grip performance is deteriorated.

The term "land ratio" used in this application means so called positive ratio or the total ground contacting area of a region to the overall area of the concerned region inclusive of the grooved area if any.

For example, it is preferable that shoulder regions Sh on both sides of the center region Cr in the tire axial direction have a land ratio more than that of the center region Cr. Thereby, grip performance during cornering is improved. Preferably, the land ratio of the shoulder region Sh is 50 % to 80 %.

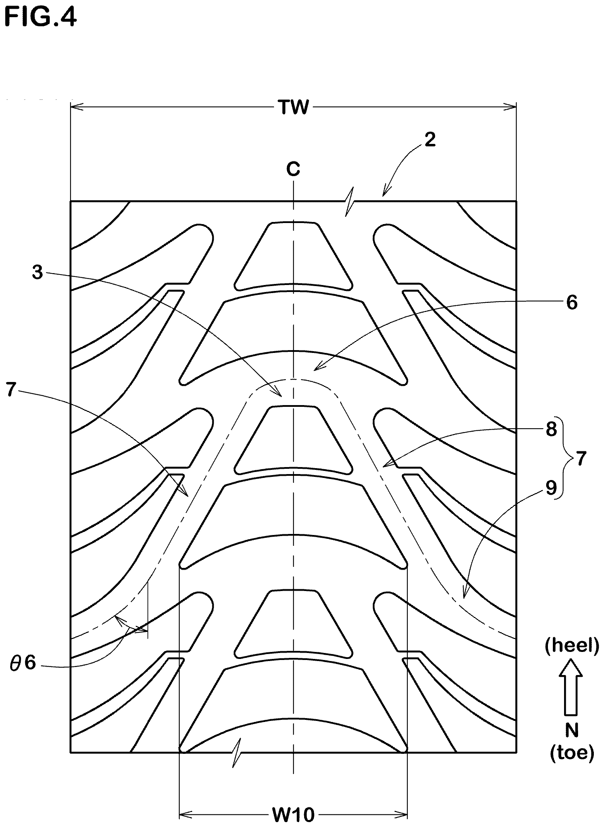

Fig. 4 - Fig. 8 respectively show further embodiments of the present invention.

As to common structures, parts and the like of the further embodiments to the above-mentioned first embodiment, their descriptions are omitted hereunder, and the same reference characters are given.

In the embodiment shown in Fig. 4, the angle θ6 of the shoulder main groove portions 7 with respect to the tire circumferential direction, and the width in the tire axial direction of the center block 11 are larger than those of the above-mentioned first embodiment. In this embodiment, the angle θ6 of the shoulder main groove portions 7 is 30 to 70 degrees, and
the maximum width W10 in the tire axial direction of the center block 11 is 0.45 to 0.55 times the tread width TW.

Such embodiment increases the drainage of the main oblique grooves and exerts excellent wet grip performance.

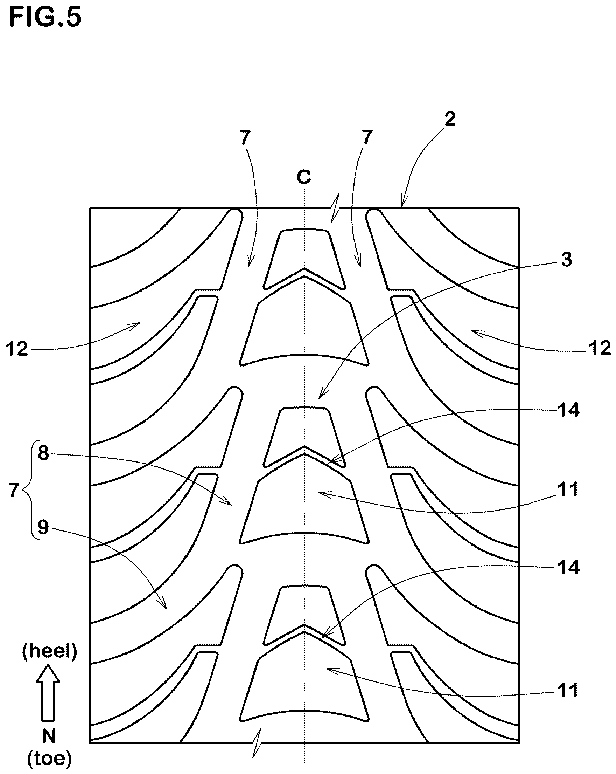

In the embodiment shown in Fig. 5, the center sub groove 14 extends in the form of a substantially v shape convexed toward the tire rotational direction.

In such embodiment, during wet running, the v-shape's vertex of the center sub groove 14 breaks a water film, and prevents the occurrence of aquaplaning, therefore, the wet grip performance particularly during high speed running is improved.

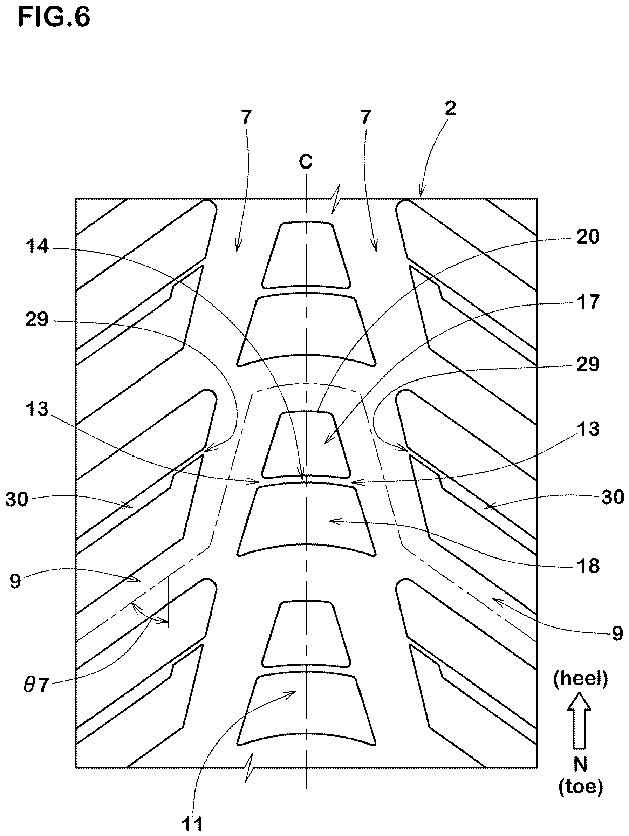

In the embodiment shown in Fig. 6, the inner end 29 of the shoulder sub groove 30 is disposed on the heel-side of the outer end 13 of the center sub groove 14 and on the toe-side of the heel-side edge 20 of the heel-side piece 17 of the center block 11.

The amount of water guided from the main oblique groove 3 to the shoulder sub groove 30 is further increased, and the wet grip performance is further improved.

In this embodiment, in order to effectively bring out the above described advantageous effects, the second shoulder main groove portion 9 extends straight at a constant angle θ7 with respect to the tire circumferential direction, and
the shoulder sub groove 30 extends straight along the second shoulder main groove portion 9.

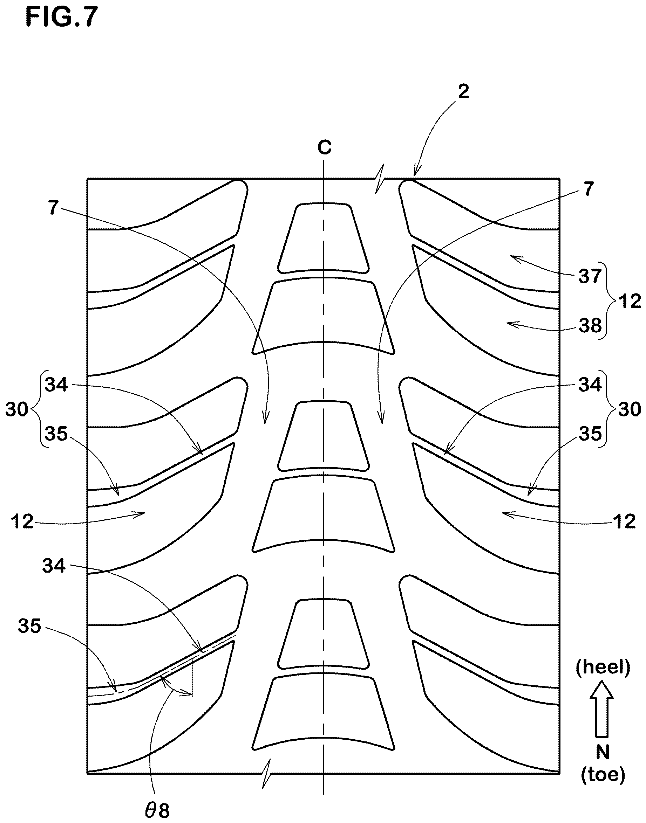

In the embodiment shown in Fig. 7, the shoulder sub groove 30 includes a first groove part 34 extending straight with a substantially constant groove width, and a second groove part 35 extending from the outer end of the first groove part 34 in the tire axial direction toward the outside in the tire axial direction while gradually increasing the groove width.

Preferably, the first groove part 34 is inclined with respect to the tire circumferential direction at an angle θ8 of from 50 to 70 degrees.

In such embodiment, the rigidity of the shoulder block 12 is maintained, and the uneven wear can be further prevented.

The structures of the embodiments illustrated with Fig. 4 - Fig. 7 may be arbitrarily combined into one embodiment.

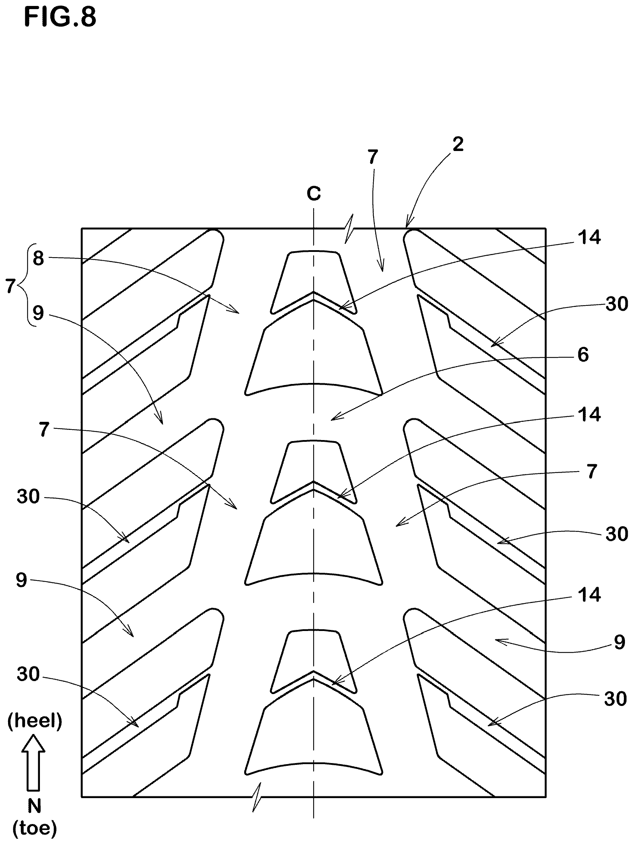

For example, in the embodiment shown in Fig. 8, the center sub groove 14 extending in the form of a substantially v shape convexed toward the tire rotational direction (Fig. 5 embodiment) and the second shoulder main groove portion 9 and the shoulder sub groove 30 extending straight (Fig. 6 embodiment) are combined.

Such embodiment can further improve the wet grip performance during high speed running.

while detailed description has been made of specific embodiments of the present invention, these embodiments should not be construed as to limit the scope of the present invention; the present invention may be embodied in various forms.

### [working examples]

In order to confirm the advantageous effects of the present invention, based on the tread patterns shown in Fig. 1 and Fig. 4 - Fig. 8, four-wheeled racing kart tires having specifications listed in Table 1 were manufactured.

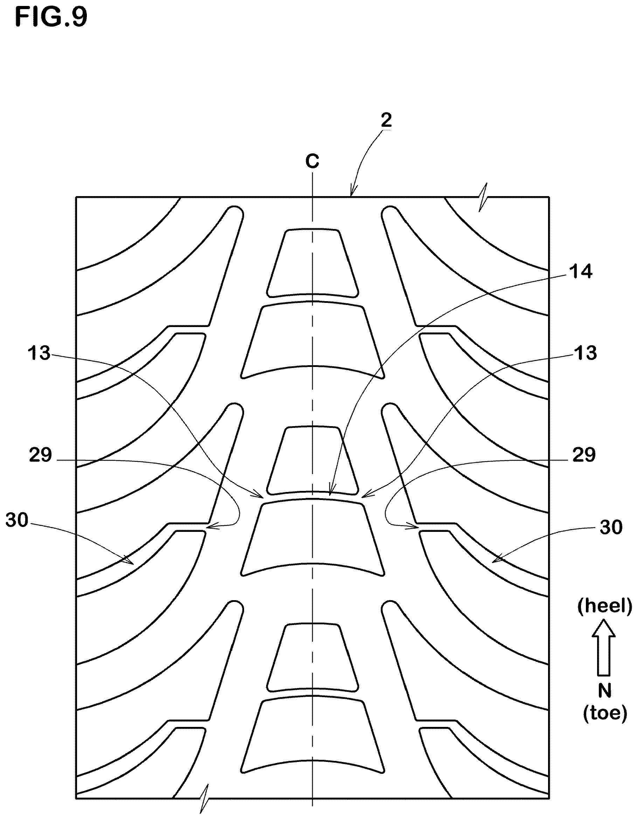

Further, a tire as a comparative example was manufactured according to the tread pattern of Fig. 9 having the inner end of the shoulder sub groove positioned on the toe-side of the outer end of the center sub groove.

Each test tire was tested for the wet grip performance, running time, wear resistance performance, and total performance. Specifications common to all of the tires and test methods are as follows.
tread width TW: 95 mm
main oblique grooves' depth: 5.0 mm
connecting grooves' depth: 5.0 mm
shoulder transverse grooves' depth: 5.0 mm

### < Wet grip performance test >

The test tires were installed on the four-wheels of a four-wheeled 100cc-engine racing kart under the following conditions.

| | |
|---|---|
| size (front): | 10x4.50-5 |
| wheel rim (front): | 4.5 |
| inner pressure (front): | 100 kPa |
| size (rear): | 11x6.50-5 |
| wheel rim (rear): | 6.5 |
| inner pressure (rear): | 100 kPa |

The test car was run on a wet asphalt road covered with 5 mm depth water, and the test driver evaluated running characteristics relating to the wet grip.

The results are indicated in Table 1 by using a five point method based on working example 1 being 5.0, wherein the larger the value, the better the performance.

### < Running time test >

The above-mentioned test car was run seven laps around a 734-meter test course with asphalt surface in a wet condition of the asphalt surface covered with 5 mm depth water as well as in a dry condition.

The running time in the wet condition and that in the dry condition were summed up as total running time of the test tire. The total running time is indicated in Table 1 by using a five point method based on the follows criteria, wherein the larger the value, the better the performance.
5.0: fastest time
4.5: fastest time + less than 0.2 sec.
4.0: fastest time + not less than 0.2 sec. and less than 0.5 sec.
3.5: fastest time + not less than 0.5 sec. and less than 1.0 sec.
3.0: fastest time + not less than 1.0 sec. and less than 1.5 sec.
2.5: fastest time + not less than 1.5 sec. and less than 2.0 sec.
2.0: fastest time + not less than 2.0 sec. and less than 2.5 sec.
1.5: fastest time + not less than 2.5 sec. and less than 3.0 sec.
1.0: fastest time + not less than 3.0 sec.

### < Wear resistance performance test >

After the above-mentioned Running time test, the tread portion was checked for a kind of wear such that the tread surface was splintered. The results are indicated in Table 1 by using a five point method based on the follows criteria, wherein the larger the value, the better the performance.
1: serious wear occurred
2: moderate wear occurred
3: slight wear occurred
4: signs of wear was found
5: no wear occurred

### < Total performance >

The average value of the points of the wet grip performance, running time and wear resistance performance of each test tire is indicated in Table 1 as Total performance.

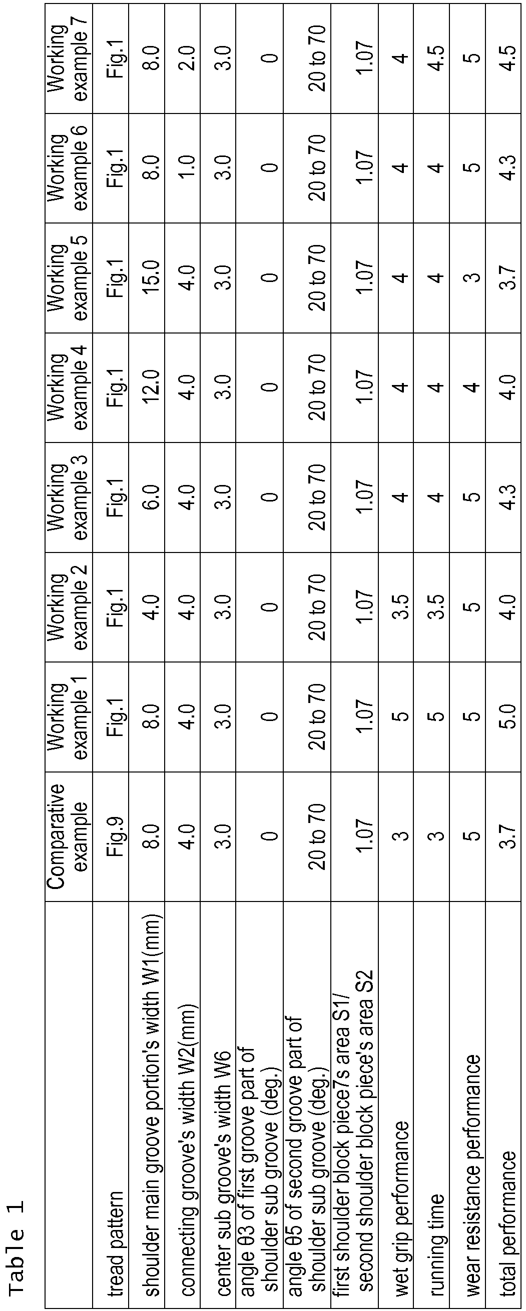

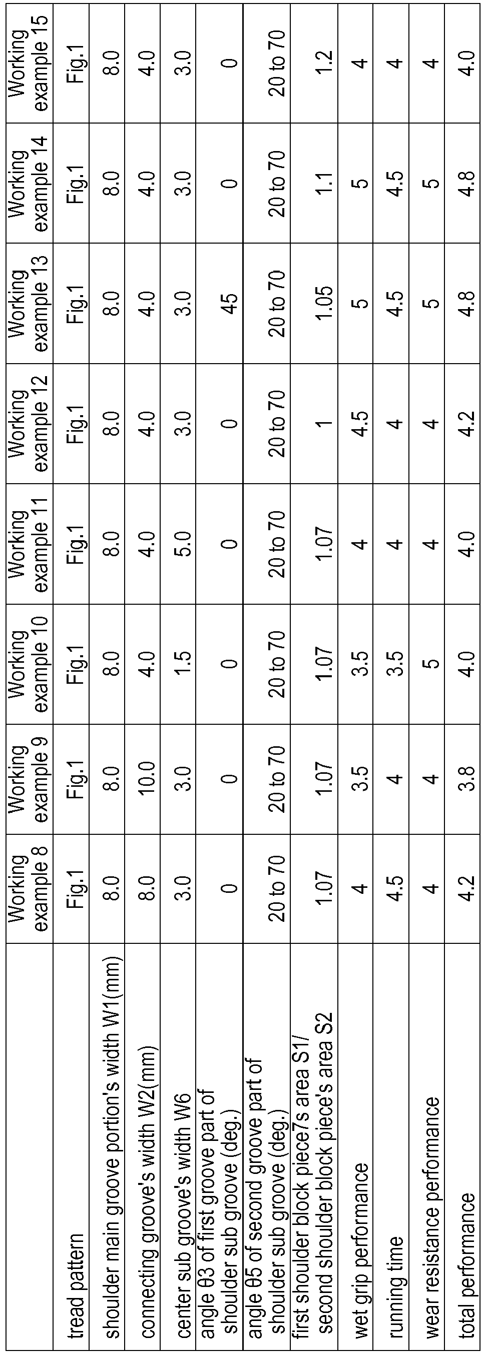

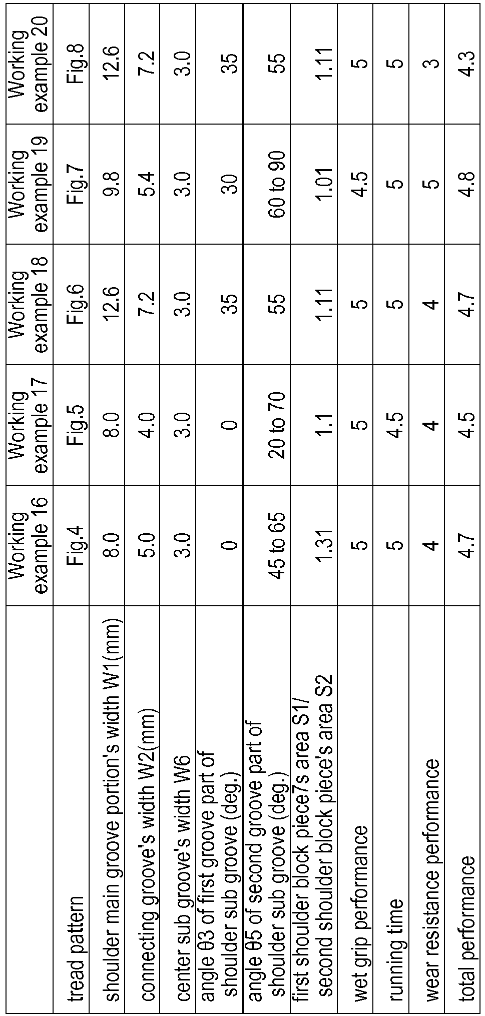

From the test results, it was confirmed that, in comparison with the comparative example tire, the working example tires were improved in the wet grip performance.

### Reference number List

- 2: tread portion
- 3: main oblique groove
- 4: connecting grooves
- 6: center main groove portion
- 7: shoulder main groove portion
- 11: center block
- 12: shoulder block
- 14: center sub groove
- 30: shoulder sub groove

## Claims

1. A pneumatic tire (1) having a tread portion (2) for which a tire rotational direction (N) is specified, and provided in the tread portion (2) with
a plurality of substantially v-shaped main oblique grooves (3) comprising a center main groove portion (6) extending in the tire axial direction across the tire equator (C), and a pair of shoulder main groove portions (7) connected to both ends of the center main groove portion (6) and extending toward the toe-side in the tire rotational direction (N) at least to tread edges (Te),
a pair of connecting grooves (4) disposed on both sides of the tire equator (C), and connecting between the main oblique grooves (3) adjacent to each other in the tire circumferential direction,
a substantially trapezoidal center block (11) sectionalized by the main oblique grooves (3) adjacent to each other in the tire circumferential direction and a pair of the connecting grooves (4), and
shoulder blocks (12) sectionalized on both sides of the center block (11) by the main oblique grooves (3) and the connecting grooves (4),
**characterized in that**
the center block (11) is provided with a center sub groove (14) whose both outer ends in the tire axial direction are respectively connected to a pair of the shoulder main groove portions (7),
the shoulder block (12) is provided with a shoulder sub groove (30) extending from the inner end connected to the shoulder main groove portion (7) to the tread edge (Te),
in a block group of one center block (11) and two shoulder blocks (12) adjacent to both sides of the center block (11) in the tire axial direction,
the inner end (29) of the shoulder sub groove (30) opposes to the outer end (13) of the center sub groove (14), or is positioned on the heel-side in the tire rotational direction (N), of the outer end (13) of the center sub groove (14).

2. The pneumatic tire (1) according to claim 1, wherein, in the block group, the inner end (29) of the shoulder sub groove (30) is positioned on the heel-side in the tire rotational direction (N), of the outer end (13) of the center sub groove (14), and positioned on the toe-side of the heel-side edge (20) in the tire rotational direction (N), of the center block (11).

3. The pneumatic tire (1) according to claim 1 or 2, wherein the center sub groove (14) extends in the form of an arc convexed toward the tire rotational direction (N).

4. The pneumatic tire (1) according to claim 1 or 2,
wherein the center sub groove (14) extends in the form of a substantially v shape convexed toward the tire rotational direction (N).

5. The pneumatic tire (1) according to any one of claims 1-4, wherein the center block (11) includes a heel-side piece (17) disposed on the heel-side of the center sub groove (14), and a toe-side piece (18) disposed on the toe-side of the center sub groove (14), and
a toe-side edge (26) of the toe-side piece (18) extending in the tire axial direction is curved with a radius of curvature smaller than that of a heel-side edge (20) of the heel-side piece (17) extending in the tire axial direction.

## Patentansprüche

1. Luftreifen (1) mit einem Laufflächenabschnitt (2), für den eine Drehrichtung (N) des Reifens festgelegt ist und der in dem Laufflächenabschnitt (2) versehen ist mit
einer Mehrzahl von im Wesentlichen V-förmigen schrägen Hauptrilien (3), die einen zentralen Hauptrillenabschnitt (6), der sich in der axialen Richtung des Reifens über den Reifenäquator (C) hinweg erstreckt, und ein Paar Schulterhauptrillenabschnitte (7), die mit beiden Enden des zentralen Hauptrillenabschnitts (6) verbunden sind und sich zu einer Zehenseite in der Drehrichtung (N) des Reifens an zumindest zwei Laufflächenkanten (Te) erstrecken, umfassen,
einem Paar Verbindungsrillen (4), die auf beiden Seiten des Reifenäquators (C) angeordnet sind und eine Verbindung zwischen den schrägen Hauptrillen (3), die benachbart zueinander in der Umfangsrichtung des Reifens liegen, herstellen,
einem im Wesentlichen trapezförmigen zentralen Block (11), der durch die schrägen Hauptrillen (3), die benachbart zueinander in der Umfangsrichtung des Reifens liegen, und ein Paar der Verbindungsrillen (4) abgeteilt ist, und
Schulterblöcken (12), die auf beiden Seiten des zentralen Blocks (11) durch die schrägen Hauptrillen (3) und die Verbindungsrillen (4) abgeteilt sind,
**dadurch gekennzeichnet, dass**
der zentrale Block (11) mit einer zentralen Unterrille (14) versehen ist, deren beide Außenenden in der axialen Richtung des Reifens jeweils mit einem Paar der Schulterhauptrillenabschnitte (7) verbunden sind,
der Schulterblock (12) mit einer Schulterunterrille (30) versehen ist, die sich von dem Innenende, das mit dem Schulterhauptrillenabschnitt (7) verbunden ist, zu der Laufflächenkante (Te) erstreckt,
in einer Blockgruppe von einem zentralen Block (11) und zwei Schulterblöcken (12) benachbart zu beiden Seiten des zentralen Blocks (11) in der axialen Richtung des Reifens,
das Innenende (29) der Schulterunterrille (30) dem Außenende (13) der zentralen Unterrille (14) gegenüberliegt oder an der Fersenseite in der Drehrichtung (N) des Reifens des Außenendes (13) der zentralen Unterrille (14) angeordnet ist.

2. Luftreifen (1) nach Anspruch 1, wobei in der Blockgruppe das Innenende (29) der Schulterunterrille (30) in der Drehrichtung (N) des Reifens auf der Fersenseite des Außenendes (13) der zentralen Unterrille (14) angeordnet ist, und in der Drehrichtung (N) des Reifens auf der Zehenseite der fersenseitigen Kante (20) des zentralen Blocks (11) angeordnet ist.

3. Luftreifen (1) nach Anspruch 1 oder 2, wobei sich die zentrale Unterrille (14) in der Form eines Bogens erstreckt, der zu der Drehrichtung (N) des Reifens hin konvex ausgebildet ist.

4. Luftreifen (1) nach Anspruch 1 oder 2, wobei die zentrale Unterrille (14) sich im Wesentlichen in der Form eines V erstreckt, das zu der Drehrichtung (N) des Reifens hin konvex ausgebildet ist.

5. Luftreifen (1) nach einen der Ansprüche 1 bis 4, wobei der zentrale Block (11) ein fersenseitiges Stück (17), das auf der Fersenseite der zentralen Unterrille (14) angeordnet ist, und ein zehenseitiges Stück (18), das auf der Zehenseite der zentralen Unterrille (14) angeordnet ist, umfasst, und
eine zehenseitige Kante (26) des zehenseitigen Stücks (18), die sich in der axialen Richtung des Reifens erstreckt, mit einem Krümmungsradius gekrümmt ist, der kleiner ist als der einer fersenseitigen Kante (20) des fersenseitigen Stücks (17), die sich in der axialen Richtung des Reifens erstreckt.

## Revendications

1. Bandage pneumatique (1) ayant une portion formant bande de roulement (2) pour laquelle une direction de rotation (N) du pneumatique est spécifiée, et doté, dans la portion formant bande de roulement (2)
d'une pluralité de rainures principales obliques (3) sensiblement en forme de V comprenant une portion de rainure principale centrale (6) s'étendant dans la direction axiale du pneumatique à travers l'équateur de pneumatique (C) et une paire de portions de rainures principales d'épaulement (7) connectées aux deux extrémités de la portion de rainure principale centrale (6) et s'étendant vers le côté pincement dans la direction de rotation (N) du pneumatique au moins vers des bordures de roulement (Te),
d'une paire de rainures de connexion (4) disposées sur les deux côtés de l'équateur de pneumatique (C) et assurant une connexion entre les rainures principales obliques (3) adjacentes les unes aux autres dans la direction circonférentielle du pneumatique,
d'un bloc central sensiblement trapézoïdal (11) divisé en sections par les rainures principales obliques (3) adjacentes les unes aux autres dans la direction circonférentielle du pneumatique et par une paire des rainures de connexion (4), et
de blocs d'épaulement (12) divisés en sections sur les deux côtés du bloc central (11) par les rainures principales obliques (3) et par les rainures de connexion (4),
**caractérisé en ce que**
le bloc central (11) est doté d'une rainure annexe centrale (14) dont les deux extrémités extérieures dans la direction axiale du pneumatique sont respectivement connectées à une paire des portions de rainures principales d'épaulement (7),
le bloc d'épaulement (12) est doté d'une rainure annexe d'épaulement (30) s'étendant depuis l'extrémité intérieure connectée à la portion de rainures principales d'épaulement (7) vers la bordure de roulement (Te),
dans un groupe de blocs formés d'un bloc central (11) et de deux blocs d'épaulement (12) adjacents sur les deux côtés du bloc central (11) dans la direction axiale du pneumatique :
l'extrémité intérieure (29) de la rainure annexe d'épaulement (30) est opposée à l'extrémité extérieure (13) de la rainure annexe centrale (14), ou bien est positionnée sur le côté carrossage dans la direction de rotation (N) du pneumatique, de l'extrémité extérieure (13) de la rainure annexe centrale (14).

2. Bandage pneumatique (1) selon la revendication 1, dans lequel, dans le groupe de blocs, l'extrémité intérieure (29) de la rainure annexe d'épaulement (30) est positionnée sur le côté carrossage dans la direction de rotation (N) du pneumatique, de l'extrémité extérieure (13) de la rainure annexe centrale (14), et positionnée sur le côté pincement de la bordure (20) côté carrossage dans la direction de rotation (N) du pneumatique, du bloc central (11).

3. Bandage pneumatique (1) selon la revendication 1 ou 2, dans lequel la rainure annexe centrale (14) s'étend sous la forme d'un arc de forme convexe vers la direction de rotation (N) du pneumatique.

4. Bandage pneumatique (1) selon la revendication 1 ou 2, dans lequel la rainure annexe centrale (14) s'étend sous une forme sensiblement en V de forme convexe vers la direction de rotation (N) du pneumatique.

5. Bandage pneumatique (1) selon l'une quelconque des revendications 1 à 4, dans lequel le bloc central (11) inclut une pièce côté carrossage (17), disposée sur le côté carrossage de la rainure annexe centrale (14), et une pièce côté pincement (18) disposée sur le côté pincement de la rainure annexe centrale (14), et
une bordure côté pincement (26) de la pièce côté pincement (18) s'étendant dans la direction axiale du pneumatique est incurvée avec un rayon de courbure plus petit que celui d'une bordure côté carrossage (20) de la pièce côté carrossage (17) s'étendant dans la direction axiale du pneumatique.
